Europäisches Patentamt

European Patent Office

Office européen des brevets

(11) Publication number: **0 183 )63**
**B1**

# EUROPEAN PATENT SPECIFICATION

(45) Date of publication of patent specification: **17.01.90**

(51) Int. Cl.⁵: **G 01 T 1/29**

(21) Application number: **85113596.2**

(22) Date of filing: **25.10.85**

(54) **Radiation image recording and reproducing method.**

(30) Priority: **27.10.84 JP 226144/84**

(43) Date of publication of application:
**04.06.86 Bulletin 86/23**

(45) Publication of the grant of the patent:
**17.01.90 Bulletin 90/03**

(84) Designated Contracting States:
**DE FR NL**

(56) References cited:
**EP-A-0 077 678**
**EP-A-0 111 278**
**EP-A-0 129 801**
**EP-A-0 137 674**

(73) Proprietor: **FUJI PHOTO FILM CO., LTD.**
**210 Nakanuma Minamiashigara-shi**
**Kanagawa-ken, 250-01 (JP)**

(72) Inventor: **Umemoto, Chiyuki c/o Fuji Phc ) Film**
**Co., Ltd.**
**798 Miyanodai Kasei-machi**
**Ashigarakami-gun Kanagawa-ken (JP)**
Inventor: **Teraoka, Masanori c/o Fuji Phc ) Film**
**Co., Ltd.**
**798 Miyanodai Kasei-machi**
**Ashigarakami-gun Kanagawa-ken (JP)**
Inventor: **Nakajima, Nobuyoshi c/o Fuji r oto**
**Film Co., Ltd**
**798 Miyanodai Kasei-machi**
**Ashigarakami-gun Kanagawa-ken (JP)**

(74) Representative: **Klunker . Schmitt-Nilsor**
**Hirsch**
**Winzererstrasse 106**
**D-8000 München 40 (DE)**

Courier Press, Leamington Spa, England.

## Description

This invention relates to a radiation image recording and reproducing system wherein a radiation image stored in a stimulable phosphor sheet is read out without being adversely affected by an instantaneous light emission after-glow.

When certain kinds of phosphors are exposed to a radiation such as X-rays, α-rays, β-rays, γ-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent Nos. 4,258,264, 4,276,473, 4,315,318 and 4,387,428 and EP—A—77678 it has been proposed to use a stimulable phosphor in a radiation image recording and reproducing system. Specifically, a sheet provided with a layer of the stimulable phosphor (hereinafter referred to as a stimulable phosphor sheet or simply as a sheet) is first exposed to a radiation passing through an object to have a radiation image stored therein, and is then scanned with stimulating rays such as a laser beam which cause it to emit light in the pattern of the stored image. The light emitted by the stimulable phosphor sheet upon stimulation thereof is photoelectrically detected and converted to an electric image signal, which is processed as desired to reproduce a visible image having an improved quality, particularly a high diagnostic efficiency and accuracy.

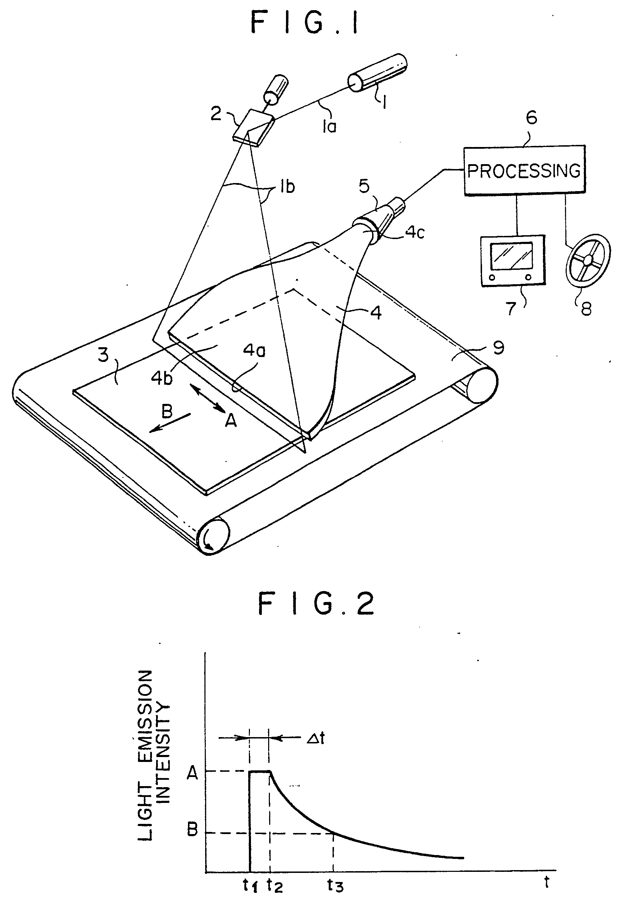

Figure 1 is a schematic view showing an example of a radiation image read-out apparatus employed in the aforesaid radiation image recording and reproducing system.

In the apparatus of Figure 1, a laser beam 1a of a predetermined intensity is emitted as stimulating rays from a laser beam source 1 to a galvanometer mirror 2. The laser beam 1a is deflected by the galvanometer mirror 2 to form a laser beam 1b impinging upon a stimulable phosphor sheet 3 positioned below the galvanometer mirror 2 so that the sheet 3 is scanned by the laser beam 1b in the main scanning direction, i.e. in the width direction of the sheet 3 as indicated by the arrow A. While the laser beam 1b impinges upon the stimulable phosphor sheet 3, the sheet 3 is conveyed in the sub-scanning direction as indicated by the arrow B, for example, by an endless belt device 9. Therefore, scanning in the main scanning direction is repeated at an angle approximately normal to the sub-scanning direction, and the whole surface of the stimulable phosphor sheet 3 is two-dimensionally scanned by the laser beam 1b. As the stimulable phosphor sheet 3 is scanned by the laser beam 1b, the portion of the sheet 3 exposed to the laser beam 1b emits light having an intensity proportional to the stored radiation energy. The light emitted by the stimulable phosphor sheet 3 enters a transparent light guide member 4 from its light input face 4a positioned close to the sheet 3 in parallel to the main scanning line. The light guide member 4 has a flat-shaped front end portion 4b positioned close to the stimulable phosphor sheet 3 and is shaped gradually into a cylindrical shape towards the rear end side to form an approximately cylindrical rear end position 4c which is closely contacted with a photomultiplier 5. The light emitted by the stimulable phosphor sheet 3 upon stimulation thereof and entering the light guide member 4 from its light input face 4a is guided inside of the light guide member 4 up to the rear end portion 4c, and received by the photomultiplier 5 via a filter (not shown) for selectively transmitting the light emitted by the stimulable phosphor sheet 3 in proportion to the radiation energy stored therein. Thus the emitted light is detected and converted into an electric image signal by the photomultiplier 5. The electric image signal thus obtained is sent to an image processing circuit 6 and processed therein. The electric image signal thus processed is then reproduced into a visible image and displayed, for example, on a CRT 7, or stored in a magnetic tape 8, or directly reproduced as a hard copy on a photographic material or the like.

In this manner, the radiation image stored in the stimulable phosphor sheet 3 is read out. However, since the light input face 4a of the light guide member 4 extends approximately over the entire width of the stimulable phosphor sheet 3 in parallel to the main scanning line therein, all light emitted by the portions of the stimulable phosphor sheet 3 covered by the light input face 4a enters the light guide member 4 from the light input face 4a and is detected by the photomultiplier 5. That is, not only the light emitted by the portion of the stimulable phosphor sheet 3 upon which the laser beam 1b impinges at any given instant, in proportion to the radiation energy stored in that portion, but also the other light emitted as described below by the portions of the sheet 3 covered by the light input face 4a enter the light guide member 4 and are detected by the photomultiplier 5. The light other than the light emitted by the portion of the stimulable phosphor sheet 3 upon which the laser beam 1b impinges at any given instant in proportion to the radiation energy stored in that portion embraces afterglows emitted by the stimulable phosphor sheet 3. The after-glows are divided into an instantaneous light emission after-glow and a stimulated light emission after-glow.

By "instantaneous light emission after-glow" is meant the after-glow of light instantaneously emitted by a stimulable phosphor sheet when the sheet is exposed to a radiation to have a radiation image stored in the sheet, the after-glow continuing to be emitted by the sheet while the light intensity decays after the exposure of the sheet to the radiation is ceased. The characteristics of the instantaneous light emission after-glow are generally as shown in Figure 2, though they will differ depending on the type of the stimulable phosphor constituting the stimulable phosphor sheet. In the graph of Figure 2, the ordinate represents the intensity of light emission and the abscissa represents time (t). As shown in Figure 2, when the exposure of a stimulable phosphor sheet to a radiation is ceased after the sheet is exposed to the radiation for a period of $\Delta t$ from a time t1 to a time t2, the intensity of light instantaneously emitted from the sheet at a light emission intensity A does not immediately decrease to zero, but instead an instantaneous light emission after-glow continues while the intensity thereof decreases along an exponential function curve the time constant of which increases gradually.

For example, decay of the light emission intensity of the instantaneous light emission after-glow is such that a light emission intensity B of the instantaneous light emission after-glow at a time t3 approximately 180 seconds after the exposure of a stimulable phosphor sheet to a radiation is ceased (i.e. t3−t2=180 seconds) is approximately $10^{-4}$ times the intensity of light emitted by the sheet when the sheet is exposed to stimulating rays.

Accordingly, in the case where a predetermined time elapses from when a stimulable phosphor sheet is exposed to a radiation passing through an object to have a radiation image stored in the sheet to when read out of the radiation image stored is conducted, the intensity of the instantaneous light emission after-glow decreases sufficiently and the effect of the after-glow becomes negligible in the read-out step. However, when read-out of the radiation image is conducted immediately after the radiation image is stored in the stimulable phosphor sheet, the light emission intensity of the instantaneous light emission after-glow does not decay sufficiently before image read-out is conducted. As a result, the instantaneous light emission after-glow is detected together with the light emitted by the stimulable phosphor sheet in proportion to the radiation energy stored when the sheet is exposed to stimulating rays, and the effect of the instantaneous light emission after-glow on the electric image signals obtained thereby becomes large.

Further, the light emission by the stimulable phosphor sheet upon stimulation thereof by stimulating rays arises from a portion having a very small area upon which the stimulating rays impinge, whereas the instantaneous light emission after-glow is emitted by the whole surface of the stimulable phosphor sheet exposed to a radiation. Therefore, as the stimulable phosphor sheet 3 is scanned by the laser beam 1b as shown in Figure 1, the light emitted by a portion of the sheet 3 upon which the laser beam 1b impinges momentarily in proportion to the radiation energy stored in that portion and the instantaneous light emission after-glow emitted by all of the portions covered by the light input face 4a of the light guide member 4 simultaneously enter the light guide member 4 from the light input face 4a and are guided to the photomultiplier 5. In this case, since the area of the portions covered by the light input face 4a of the light guide member 4 is markedly larger than the area of the portion of the stimulable phosphor sheet 3 upon which the laser beam 1b impinges momentarily, the amount of the instantaneous light emission after glow guided to the photomultiplier 5 become not negligible even though a predetermined time elapses after the exposure of the stimulable phosphor sheet 3 to a radiation is ceased and the intensity of the instantaneous light emission after-glow becomes negligibly low as compared with the intensity of the light emitted by the sheet 3 upon stimulation thereof. (These features of the phosphor sheet are also discussed in EP—A—129801, not published prior to the present invention).

As described above, when the light emitted by the stimulable phosphor sheet in proportion to the stored radiation energy is detected and the image information is obtained, the instantaneous light emission after-glow constitutes a noise component in the image signal, and it becomes not always possible to detect the radiation image accurately. Particularly, the level of noise caused by the instantaneous light emission after glow becomes higher as the time interval between the radiation image recording and the image read-out becomes shorter. For example, as an apparatus which conducts radiation image recording and read-out continuously and efficiently and which is suitable for mass medical examination, the applicant proposed in EP—A—125800 a built-in type radiation image recording and read-out apparatus comprising, built in a single unit:

i) a circulation and conveyance means for conveying at least one stimulable phosphor sheet along a predetermined circulation path,

ii) an image recording section positioned on said circulation path for recording a radiation image of an object on said stimulable phosphor sheet by exposing said stimulable phosphor sheet to a radiation passing through said object,

iii) an image read-out section positioned on said circulation path and provided with a stimulating ray source for emitting stimulating rays for scanning said stimulable phosphor sheet carrying said radiation image stored therein at said recording section, and a photoelectric read-out means for detecting light emitted by said stimulable phosphor sheet scanned with said stimulating rays to obtain an electric image signal, and

iv) an erasing section positioned on said circulation path for, prior to the next image recording on said stimulable phosphor sheet for which the image read-out has been conducted at said image read-out section, releasing the radiation energy remaining in said stimulable phosphor sheet, whereby said stimulable phosphor sheet is circulated through said image recording section, said image read-out section and said erasing section and reused for radiation image recording. In a built-in type radiation image recording and read-out apparatus, since the stimulable phosphor sheet is circulated and reused, the time interval

between the image recording and the image read-out is generally very short, and a very real problem is generated by noise caused by the instantaneous light emission after-glow.

The primary object of the present invention is to provide a radiation image recording and reproducing system for accurately reading out a radiation image stored in a stimulable phosphor sheet without being adversely affected by an instantaneous light emission after-glow.

Another object of the present invention is to provide a radiation image recording and reproducing system which generates a visible radiation image having an improved image quality, particularly a high diagnostic efficiency and accuracy.

These objects are achieved by the invention as claimed.

The inventors studied the effect of the instantaneous light emission after-glow on the image quality when a stimulable phosphor sheet carrying a radiation image stored therein is exposed to stimulating rays which cause it to emit light in proportion to the stored radiation energy and the emitted light is detected photoelectrically, and found that a sufficiently accurate visible image is obtained by use of the photoelectrically detected signal when the level of a signal (an instantaneous light emission after-glow signal) obtained by photoelectric detection of the instantaneous light emission after-glow is not higher than $10^{-3.5}$ time the level of a signal (stimulated light emission signal) obtained by photoelectric detection of the light emitted by the stimulable phosphor sheet in proportion to the stored radiation energy.

In the radiation image recording and reproducing system of the present invention, since the image read-out is conducted in such a condition that the level of the instantaneous light emission after-glow signal obtained by photoelectric detection of the instantaneous light emission after-glow is not higher than $10^{-3.5}$ time the level of the stimulated light emission signal obtained by photoelectric detection of the light emitted by the stimulable phosphor sheet in proportion to the stored radiation energy, the image quality is not adversely affected by the instantaneous light emission after-glow, and it is possible to obtain a visible radiation image accurately.

Brief description of the drawings

Figure 1 is a perspective view showing the conventional radiation image read-out apparatus, and

Figure 2 is a graph showing the relationship between the intensity of the instantaneous light emission after-glow and time.

Detailed description of the invention

A method of quantitatively grasping the effect of the instantaneous light emission after-glow on the image will first be described below. In order to grasp the instantaneous light emission after-glow quantitatively, a stimulable phosphor sheet is uniformly exposed to a radiation. A predetermined time after the stimulable phosphor sheet is exposed to the radiation, the instantaneous light emission after-glow released by the surface of the stimulable phosphor sheet is guided by the light guide member 4 shown in Figure 1, and photoelectrically detected by the photomultiplier 5 to obtain an instantaneous light emission after-glow signal (S1). Then, when the instantaneous light emission after-glow almost disappears after a sufficient time interval, the surface of the stimulable phosphor sheet is scanned by stimulating rays which cause the sheet to emit light in proportion to the stored radiation energy, and the emitted light is guided by the light guide member 4 and photoelectrically detected by the photomultiplier 5 to obtain a stimulated light emission signal (S2). The ratio of the instantaneous light emission after-glow signal (S1) to the stimulated light emission signal (S2) is calculated, and the relationship between the ratio thus calculated and the time elapsed after the exposure of the stimulable phosphor sheet to the radiation is investigated.

Thereafter, a stimulable phosphor sheet of the same material as the material of the aforesaid stimulable phosphor sheet is exposed to the radiation passing through an object to have a radiation image of the object stored therein. After a predetermined time, the stimulable phosphor sheet is scanned by stimulating rays, and a visible image is reproduced. Based on the image quality of the reproduced visible image, the effect of the instantaneous light emission after-glow on the image quality is investigated.

As described above, the relationship between the ratio of the instantaneous light emission after-glow signal (S1) to the stimulated light emission signal (S2) and the image quality of the reproduced radiation image at the corresponding ratio was investigated. The results are shown in Table 1.

TABLE 1

| Ratio (S1/S2) | Image quality |
|---|---|
| Above $10^{-3.0}$ | x |
| $10^{-3.0}$ | x |
| $10^{-3.5}$ | Δ |
| $10^{-4.0}$ | o |
| Below $10^{-4.0}$ | o |

In Table 1, "x" indicates that the effect of the instantaneous light emission after-glow on the image quality is visually perceptible and presents a problem in practical use, and "Δ" denotes that the practical problem little arises through a slight effect of the instantaneous light emission after-glow is observed visually. The mark "o" indicates that no effect of the instantaneous light emission after-glow is observed visually and no problem arises practically.

As shown in Table 1, it was found that the image quality of the visible radiation image reproduced is sufficiently accurate for practical use when the level of the instantaneous light emission after-glow signal is not higher than $10^{-3.5}$ time the level of the stimulated light emission signal.

Accordingly, in the radiation image recording and reproducing method of the present invention, read-out of the radiation image stored in the stimulable phosphor sheet by exposure thereof to stimulating rays is conducted in such a condition that the level of the instantaneous light emission after-glow signal is not higher than $10^{-3.5}$ time the level of the stimulated light emission signal, thereby accurately obtaining a reproduced visible image.

The time required for the level of the instantaneous light emission after-glow signal to become $10^{-3.5}$ time the level of the stimulated light emission signal or less is different according to the type of the stimulable phosphor. Therefore, for example, when the time interval between the image recording by exposure to a radiation and the image readout with stimulating rays is short as in the case of the aforesaid built-in type radiation image recording and reproducing system, a stimulable phosphor exhibiting a high rate of decay of the instantaneous light emission after-glow is used, or the image read-out is delayed until the level of the instantaneous light emission after-glow signal becomes not higher than $10^{-3.5}$ time the level of the stimulated light emission signal, so that the visible image is obtained accurately. Conversely, when the time interval between the image recording and the image read-out is sufficiently long, the decay rate of the instantaneous light emission after-glow need not be so high.

The component adversely affecting the image quality is the level of the instantaneous light emission after-glow signal used for image reproduction after the instantaneous light emission after-glow is photoelectrically detected. Therefore, the level of the instantaneous light emission after-glow signal may be made not higher than the predetermined value ($10^{-3.5}$ time the stimulated light emission signal) by absorbing the instantaneous light emission after-glow by use of a filter positioned at the light guide member, or by modifying the light guiding system as described in Japanese Unexamined Patent Publication Nos. 61(1986)-49556, 61(1986)63155, 61(1986)77841 and 61(1986) and in EP—A—137674 even when the intensity of the instantaneous light emission after-glow is still high.

## Claims

1. A radiation image recording and reproducing system for storing a radiation image in a stimulable phosphor sheet, in which the stimulable phosphor sheet is exposed to stimulating rays which cause the stimulable phosphor sheet to emit light in proportion to the stored radiation energy, the emitted light is photoelectrically detected to obtain an electric image signal, and a visible image is reproduced by use of the electric image signal, wherein the detection is conducted in such a condition that the level of an instantaneous light emission after-glow signal representing an instantaneous light emission after-glow released by said stimulable phosphor sheet after said stimulable phosphor sheet is exposed to a radiation to have said radiation image stored in said stimulable phosphor sheet (3) is not higher than $10^{-3.5}$ time the level of a stimulated light emission signal representing the light emitted by a portion of said stimulable phosphor sheet exposed to said stimulating rays in proportion to the stored radiation energy, the system comprising:

i) a circulation and conveyance means (9) for conveying at least one stimulable phosphor sheet (3) along a predetermined circulation path,

ii) an image recording section positioned on said circulation path for recording a radiation image of an object on said stimulable phosphor sheet by exposing said stimulable phosphor sheet (3) to a radiation passing through said object,

iii) an image read-out section (4—8) positioned on said circulation path and provided with a stimulating ray source (1) for emitting stimulating rays for scanning said stimulable phosphor sheet (3) carrying said radiation image stored therein at said image recording section (4—8), and a photoelectric read-out means (4, 5, 6) for detecting light emitted by said stimulable phosphor sheet (3) scanned with said stimulating rays to obtain an electric image signal, and

iv) an erasing section positioned on said circulation path for, prior to the next image recording on said stimulable phosphor sheet for which the image read-out has been conducted at said image read-out section, releasing the radiation energy remaining in said stimulable phosphor sheet.

2. A system as defined in Claim 1 wherein said detection is conducted in such a condition that the level of said instantaneous light emission after-glow signal is not higher than $10^{-4.0}$ time the level of said stimulated light emission signal.

## Patentansprüche

1. Strahlungbild-Aufzeichnungs- und -wiedergabesystem zum Speichern eines Strahlungsbildes in einem anregbaren Leuchtstoffblatt, in welchem das anregbare Leuchtstoffblatt Anregungsstrahlen ausgesetzt wird, die das anregbare Leuchtstoffblatt veranlassen, Licht im Verhältnis zu der gespeicherten Strahlungsenergie zu emittieren, das emittierte Licht photoelektrisch erfaßt wird, um ein elektrisches Bildsignal zu erhalten, und ein sichtbares Bild unter Verwendung des elektrischen Bildsignals reproduziert wird, wobei das Erfassen unter einer solchen Bedingung durchgeführt wird, daß der Pegel eines augenblicklichen Lichtemissions-Nachglühsignals, welches ein augenblickliches Lichtemissions-Nachglühen, das von dem anregbaren Leuchtstoffblatt freigesetzt wird, nachdem das anregbare Leuchtstoffblatt einer Strahlung ausgesetzt

wurde, um in dem anregbaren Leuchtstoffblatt (3) ein Strahlungsbild zu speichern, nicht größer ist als das $10^{-3,5}$-fache des Pegels eines stimulierten Lichtemissionssignals, welches repräsentativ ist für das Licht, das von einem Abschnitt des anregbaren Leuchtstoffblatts emittiert wird, welcher den Anregungsstrahlen im Verhältnis zu der gespeicherten Strahlungsenergie ausgesetzt wird, umfassend:

i) eine Umlauf- und Transporteinrichtung (9) zum Transportieren mindestens eines anregbaren Leuchtstoffblatts (3) entlang eines vorbestimmten Umlaufweges,

ii) einen Bildaufzeichnungsabschnitt, der an dem Umlaufweg liegt, um ein Strahlungsbild eines Gegenstandes auf einem anregbaren Leuchtstoffblatt aufzuzeichnen; indem das anregbare Leuchtstoffblatt (3) einer durch den Gegenstand durchgehenden Strahlung ausgesetzt wird,

iii) einen Bildleseabschnitt (4—8), der an dem Umlaufweg liegt und mit einer Anregungsstrahlenquelle (1) versehen ist, die Anregungsstrahlen emittiert zum Abtasten des anregbaren Leuchtstoffblatts (3), welches das in ihm an dem Bildaufzeichnungsabschnitt (4—8) gespeicherte Strahlungsbild trägt, und der mit einer photoelektrischen Ausleseeinrichtung (4, 5, 6) versehen ist, die von dem anregbaren Leuchtstoffblatt (3), das mit den Anregungsstrahlen abgetastet wird, emittiertes Licht erfaßt, um ein elektrisches Bildsignal zu erhalten, und

iv) einen Löschabschnitt, der an dem Umlaufweg liegt, um vor der nächsten Bildaufzeichnung auf dem anregbaren Leuchtstoffblatt, bei dem das Auslesen des Bildes in dem Bildleseabschnitt durchgeführt wurde, die in dem anregbaren Leuchtstoffblatt verbliebene Strahlungsenergie freizusetzen.

2. System nach Anspruch 1, bei dem das Erfassen unter einer solchen Bedingung durchgeführt wird, daß der Pegel des momentanen Lichtemissions-Nachglühsignals nicht größer ist als das $10^{-4,0}$-fache des Pegels des angeregten Lichtemissionssignals.

**Revendications**

1. Système d'enregistrement et de reproduction d'une image de rayonnement, destiné à emmagasiner une image de rayonnement dans une feuille de substance luminescente stimulable, dans lequel la feuille de substance luminescente stimulable est exposée à des rayons de stimulation qui entraînent que la feuille de substance luminescente stimulable émette de la lumière en proportion de l'énergie de rayonnement emmagasinée, la lumière émise est détectée photoélectriquement pour obtenir un signal électrique d'image et une image visible est reproduite en utilisant le signal électrique d'image, dans lequel la détection est effectuée dans des conditions telles que le niveau du signal de persistance d'émission lumineuse instantanée représentant une persistance d'émission lumineuse instantanée libérée par la feuille de substance luminescente stimulable après que ladite feuille de substance luminescente stimulable a été exposée à un rayonnement pour que ladite image de rayonnement soit emmagasinée dans ladite feuille de substance luminescente stimulable (3) ne soit pas supérieur à $10^{-3,5}$ fois le niveau d'un signal d'émission lumineuse stimulée représentant la lumière émise par une partie de ladite feuille de substance luminescente stimulable exposée auxdits rayons de stimulation en proportion de l'énergie de rayonnement emmagasinée, le système comportant:

i) un dispositif de circulation et de transport (9) destiné à transporter au moins une feuille de substance luminescente stimulable (3) le long d'un trajet de circulation prédéterminé,

ii) une section d'enregistrement d'image positionnée sur ledit trajet de circulation pour enregistrer une image de rayonnement d'un objet sur ladite feuille de substance luminescente stimulable en exposant ladite feuille de substance luminescente stimulable (3) à un rayonnement qui traverse ledit objet,

iii) une section de lecture d'image (4—8) positionnée sur ledit trajet de circulation et munie d'une source de rayons de stimulation (1) pour émettre des rayons de stimulation destinés à explorer ladite feuille de substance luminescente stimulable (3) portant ladite image de rayonnement qui y est emmagasinée à ladite section d'enregistrement d'image (4—8) et un dispositif de lecture photoélectrique (4, 5, 6) pour détecter la lumière émise par la feuille de substance luminescente stimulable (3) explorée par lesdits rayons de stimulation pour obtenir un signal électrique d'image, et

iv) une section d'effacement positionnée sur ledit trajet de circulation pour, avant l'enregistrement de l'image suivant sur ladite feuille de substance luminescente stimulable pour laquelle la lecture d'image a été effectuée dans ladite section de lecture d'image, libérer l'énergie de rayonnement qui subsiste dans ladite feuille de substance luminescente stimulable.

2. Système selon la revendication 1, dans lequel ladite détection est effectuée dans des conditions telles que le niveau du signal de persistance d'émission lumineuse instantanée ne soit pas supérieur à $10^{-4,0}$ fois le niveau dudit signal d'émission lumineuse stimulée.

# F I G . I

# F I G . 2